(19) Europäisches Patentamt
European Patent Office
Office européen des brevets

(11) **EP 3 045 428 B1**

(12) **EUROPEAN PATENT SPECIFICATION**

(45) Date of publication and mention
of the grant of the patent:
**18.07.2018 Bulletin 2018/29**

(51) Int Cl.:
***C02F 1/00*** *(2006.01)*  ***C02F 1/44*** *(2006.01)*
***B01D 65/02*** *(2006.01)*

(21) Application number: **15191404.1**

(22) Date of filing: **26.10.2015**

(54) **METHOD AND DEVICE FOR PROMPTING USER BASED ON SMART WATER PURIFYING EQUIPMENT**

VERFAHREN UND VORRICHTUNG ZUR AUFFORDERUNG EINES BENUTZERS AUF GRUNDLAGE EINER INTELLIGENTEN WASSERREINIGUNGSVORRICHTUNG

PROCÉDÉ ET DISPOSITIF DE REQUÊTE D'UTILISATEUR SUR LA BASE D'UN ÉQUIPEMENT DE PURIFICATION D'EAU INTELLIGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2014 CN 201410602416**

(43) Date of publication of application:
**20.07.2016 Bulletin 2016/29**

(73) Proprietor: **Xiaomi Inc.
Beijing 100085 (CN)**

(72) Inventors:
• **YANG, Yun
10085 BEIJING (CN)**
• **GAO, Ziguang
10085 BEIJING (CN)**
• **YIN, Mingjun
100085 BEIJING (CN)**

(74) Representative: **Studio Torta S.p.A.
Via Viotti, 9
10121 Torino (IT)**

(56) References cited:
WO-A1-2016/065809    CN-A- 102 874 941
KR-A- 20130 136 406

**Description**

**TECHNICAL FIELD**

The present disclosure relates to the field of smart household appliances and, more particularly, to a method and a device for prompting a user based on a smart water purifying equipment.

**BACKGROUND**

With the continuous improvement of living standards, people put more emphasis on water quality. Therefore, more and more people purchase water purifying equipment at home to purify various foreign matters and bacteria in tap water.

During the course of using the water purifying equipment, since fracture of wire will occur in various filter membranes under the action of hydraulic pressure, the bacteria will enter the interior of the water purifying equipment through the filter membrane or through the water outlet, and finally cause pollution to the interior of the water purifying equipment. As a result, a regular physical cleaning (including clockwise-washing and back-washing) on the water purifying equipment is required. Normally, different cleaning periods will be set with respect to water qualities of different regions in the specifications when the water purifying equipment is delivered, so as to prompt users to determine the cleaning period of cleaning the water purifying equipment according to the located position thereof.

It is found that the related art at least has the following defects:

during the course of using the water purifying equipment, people possibly forget to clean the water purifying equipment according to the cleaning period, thus resulting in excessive bacteria in the water purifying equipment and losing the object of the water purifying equipment for purifying water sources.

Patent document CN102874941 relates to the water treatment industry, specifically to the field of deep filtering of drinking water. Patent document KR20130136406 relates to a deionization filter, a water treatment apparatus having a deionization filter, and a method

for regenerating a deionization filter. However, the above identified problem remains unsolved.

**SUMMARY**

In order to overcome the problems in the related art, the present disclosure provides a method and a device for prompting a user based on a smart water purifying equipment, as claimed in claim 1 and, respectively, claim 5. The technical solutions are as follows.

According to a first aspect of the present invention, there is provided a method for prompting a user based on a smart water purifying equipment, including:

receiving, by a server, total dissolved solids (TDS) data detected after water purifying and reported by the water purifying equipment;
calculating accumulative TDS data corresponding to the water purifying equipment according to the TDS data, the accumulative TDS data being a total TDS data increment of the water purifying equipment after a latest cleaning;
calculating a cleaning period of the water purifying equipment under the current state according to the accumulative TDS data corresponding to the water purifying equipment and a preset maximum cleaning time; and
if a difference value between a current date and a latest cleaning date corresponding to the water purifying equipment is greater than or equal to the cleaning period, sending a prompt message to a terminal associated with the water purifying equipment to prompt a user to clean the water purifying equipment.

In a first possible implementation manner of the first aspect, the receiving, by the server, the TDS data detected after the water purifying is performed by the water purifying equipment includes:

receiving, by the server, water inlet TDS data and water outlet TDS data detected after water purifying and reported by the water purifying equipment; or,
receiving, by the server, incremental TDS data obtained by calculating water inlet TDS data and water outlet TDS data detected after the water purifying and reported by the water purifying equipment.

In a second possible implementation manner of the first aspect, the method further includes:

receiving a cleaning event message reported by the water purifying equipment; and
updating the latest cleaning date corresponding to the water purifying equipment according to the cleaning event message.

With reference to the second possible implementation manner of the first aspect, in a third possible implementation manner, after the updating the latest cleaning date corresponding to the water purifying equipment according to the cleaning event message, the method further includes:
conducting zero clearing on the accumulative TDS data corresponding to the water purifying equipment.

There is further described a method (not according to the invention) for prompting a user based on a smart water purifying equipment, including:

after water purifying is performed by a water purifying equipment, acquiring TDS data detected after the water purifying is performed by the water purifying equipment; and
sending the TDS data to a server, so that the server sends a prompt message to a terminal associated with the water purifying equipment according to the TDS data.

In a first possible implementation manner of the above aspect, the acquiring the TDS data detected after the water purifying is performed by the water purifying equipment includes:

acquiring water inlet TDS data and water outlet TDS data detected after the water purifying is performed by the water purifying equipment; and
accordingly, the sending the TDS data to the server includes:
sending the water inlet TDS data and the water outlet TDS data to the server.

In a second possible implementation manner of the above aspect, the acquiring the TDS data detected after the water purifying is performed by the water purifying equipment includes:

acquiring water inlet TDS data and water outlet TDS data detected after the water purifying is performed by the water purifying equipment; and
calculating incremental TDS data according to the water inlet TDS data and the water outlet TDS data; and
accordingly, the sending the TDS data to the server includes:
sending the incremental TDS data to the server.

In a third possible implementation manner of the above aspect, the method further includes:
if detecting that the water purifying equipment triggers a cleaning event, sending a cleaning event message to the server.

According to a second aspect of the present invention, there is provided a device for prompting a user based on a smart water purifying equipment, including:

a first receiving module configured to receive, by a server, total dissolved solids (TDS) data detected after water purifying and reported by a water purifying equipment;
a first calculation module configured to calculate accumulative TDS data corresponding to the water purifying equipment according to the TDS data received by the first receiving module, the accumulative TDS data being a total TDS data increment of the water purifying equipment after a latest cleaning;
a second calculation module configured to calculate a cleaning period of the water purifying equipment under the current state according to the accumulative TDS data corresponding to the water purifying equipment calculated by the first calculation module and a preset maximum cleaning time; and
a prompting module configured to send a prompt message to a terminal associated with the water purifying equipment to prompt a user to clean the water purifying equipment if a difference value between a current date and a latest cleaning date corresponding to the water purifying equipment is greater than or equal to the cleaning period.

In a first possible implementation manner of the second aspect, the first receiving module includes:

a first receiving unit configured to receive, by a server, water inlet TDS data and water outlet TDS data detected after the water purifying and reported by the water purifying equipment; and
a second receiving unit configured to receive, by the server, incremental TDS data obtained by calculating the water inlet TDS data and the water outlet TDS data detected after the water purifying and reported by the water purifying equipment.

In a second possible implementation manner of the second aspect (not according to the invention), the device further includes:

a determination module configured to determine that the cleaning period satisfies the preset condition when a difference value between a current date and a latest cleaning date corresponding to the water purifying equipment is greater than or equal to the cleaning period calculated by the second calculation module.

In a third possible implementation manner of the second aspect (not according to the invention), the device further includes:

a second receiving module configured to receive a cleaning event message reported by the water purifying equipment; and

an updating module configured to update the latest cleaning date corresponding to the water purifying equipment according to the cleaning event message received by the second receiving module.

With reference to the third possible implementation manner, in a fourth possible implementation manner (not according to the invention), the device further includes: a processing module configured to conduct zero clearing on the accumulative TDS data corresponding to the water purifying equipment.

According to another aspect of embodiments disclosed (but not forming part of the claimed invention), there is provided a device for prompting a user based on a smart water purifying equipment, including:

an acquisition module configured to, after water purifying is performed by a water purifying equipment, acquire TDS data detected after the water purifying is performed by the water purifying equipment; and

a first sending module configured to send the TDS data acquired by the acquisition module to a server, so that the server sends a prompt message to a terminal associated with the water purifying equipment according to the TDS data.

In a first possible implementation manner of this aspect, the acquisition module includes:

a first acquisition unit configured to acquire water inlet TDS data and water outlet TDS data detected after the water purifying is performed by the water purifying equipment; and

accordingly, the first sending module includes:

a first sending unit configured to send the water inlet TDS data and the water outlet TDS data acquired by the first acquisition unit to the server.

In a second possible implementation manner of this aspect, the acquisition module includes:

a second acquisition unit configured to acquire water inlet TDS data and water outlet TDS data detected after the water purifying is performed by the water purifying equipment; and

a calculation unit configured to calculate incremental TDS data according to the water inlet TDS data and the water outlet TDS data; and

accordingly, the first sending module includes:

a second sending unit configured to send the incremental TDS data acquired by the first acquisition unit to the server.

In a third possible implementation manner of this aspect, the device further includes:

a second sending module configured to send a cleaning event message to the server if detecting that the water purifying equipment triggers a cleaning event.

According to another aspect of embodiments of the present disclosure (not according to the invention), there is provided a device for prompting a user based on a smart water purifying equipment, including:

a processor; and

a memory for storing instructions executable by the processor;

wherein the processor is configured to:

receive, by a server, total dissolved solids (TDS) data detected after water purifying and reported by a water purifying equipment;

calculate accumulative TDS data corresponding to the water purifying equipment according to the TDS data, the accumulative TDS data being a total TDS data increment of the water purifying equipment after a latest cleaning;

calculate a cleaning period of the water purifying equipment under the current state according to the accumulative TDS data corresponding to the water purifying equipment and preset maximum cleaning time; and

if the cleaning period satisfies a preset condition, send a prompt message to a terminal associated with the water purifying equipment to prompt a user to clean the water purifying equipment.

According to yet another of embodiments of the present disclosure (not part of the claimed invention), there is provided a device for prompting a user based on a smart water purifying equipment, including:

a processor; and
a memory for storing instructions executable by the processor;
wherein the processor is configured to:

after water purifying is performed by a water purifying equipment, acquire TDS data detected after the water purifying is performed by the water purifying equipment; and
send the TDS data to a server, so that the server sends a prompt message to a terminal associated with the water purifying equipment according to the TDS data.

The present invention also provides a computer program, which when executing on a processor of a terminal, performs the method according to the invention.
The technical solutions provided by the embodiments of the present disclosure may include the following advantageous effects:
the TDS data detected after water purifying is reported to the server by the water purifying equipment, and the server calculates the accumulative TDS data of the water purifying equipment according to the TDS data, and determines the cleaning period of the water purifying equipment according to the accumulative TDS data and a preset maximum cleaning time; if the cleaning period satisfies a preset condition, a prompt message is sent to the terminal associated with the water purifying equipment. In the course of using the water purifying equipment, a user is automatically prompted directed to the water purifying equipment requiring cleaning, so that the efficiency of using the water purifying equipment is increased and the human-machine interaction is improved.
It is to be understood that both the foregoing general description and the following detailed description are exemplary and explanatory only and are not restrictive of the invention.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart of a method for prompting a user based on a smart water purifying equipment, according to an exemplary embodiment.
Fig. 2 is a flow chart of a method for prompting a user based on a smart water purifying equipment, according to an exemplary embodiment.
Fig. 3 is a flow chart of a method for prompting a user based on a smart water purifying equipment, according to an exemplary embodiment.
Fig. 4 is a flow chart of a method for reporting a cleaning event in the method for prompting a user based on a smart water purifying equipment, according to an exemplary embodiment.
Fig. 5 is a block diagram of a device for prompting a user based on a smart water purifying equipment, according to an exemplary embodiment.
Fig. 6 is a block diagram of a device for prompting a user based on a smart water purifying equipment, according to an exemplary embodiment.
Fig. 7 is a block diagram of a device for prompting a user based on a smart water purifying equipment, according to an exemplary embodiment.
Fig. 8 is a block diagram of a device for prompting a user based on a smart water purifying equipment, according to an exemplary embodiment.

## DETAILED DESCRIPTION

To make the objects, technical solutions and advantages of the present disclosure more clear, the exemplary embodiments of the present disclosure will be further described in details with reference to the accompanying drawings.

First Embodiment

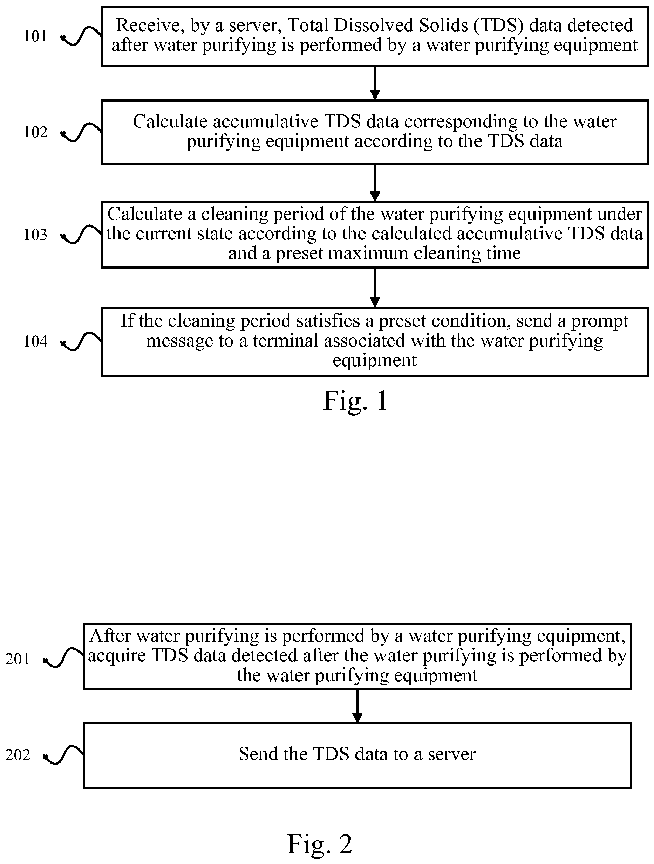

The embodiment of the present disclosure provides a method for prompting a user based on a smart water purifying equipment. The method provided by the embodiment may be applied in a server. Referring to Fig. 1, the method includes the following steps.

In step 101, a server receives total dissolved solids (TDS) data detected after water purifying is performed by a water purifying equipment.

In step 102, accumulative TDS data corresponding to the water purifying equipment is calculated according to the TDS data, the accumulative TDS data being a total TDS data increment of the water purifying equipment after the latest cleaning.

In step 103, a cleaning period of the water purifying equipment under the current state is calculated according to the calculated accumulative TDS data and a preset maximum cleaning time.

In step 104, if the cleaning period satisfies a preset condition, a prompt message is sent to a terminal associated with the water purifying equipment to prompt a user to clean the water purifying equipment.

According to the embodiment of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; and if the cleaning period satisfies a preset condition, a prompt message is sent to the terminal associated with the water purifying equipment. In the course of using the water purifying equipment, the user is automatically prompted to the water purifying equipment requiring cleaning, so that the efficiency of using the water purifying equipment is increased and the human-machine interaction is improved.

Second Embodiment

The embodiment of the present disclosure provides a method for prompting a user based on a smart water purifying equipment. The method provided by the embodiment may be applied in a water purifying equipment. Referring to Fig. 2, the method includes the following steps.

In step 201, after water purifying is performed by a water purifying equipment, TDS data detected after the water purifying is performed by the water purifying equipment is acquired.

In step 202, the TDS data is sent to a server, so that the server sends a prompt message to a terminal associated with the water purifying equipment according to the TDS data.

According to the embodiment of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; and if the cleaning period satisfies a preset condition, a prompt message is sent to the terminal associated with the water purifying equipment. In the course of using the water purifying equipment, the user is automatically prompted to the water purifying equipment requiring cleaning, so that the efficiency of using the water purifying equipment is increased and the human-machine interaction is improved.

Third Embodiment

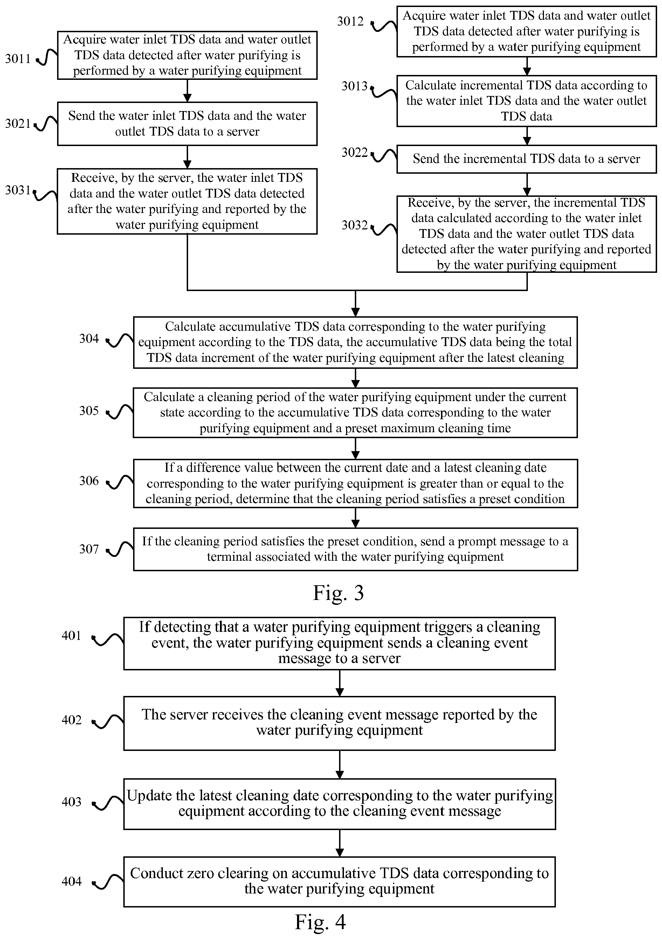

The embodiment of the present disclosure provides a method for prompting a user based on a smart water purifying equipment. Referring to Fig. 3, the method includes the following steps.

In step 301, after water purifying is performed by a water purifying equipment, TDS data detected after the water purifying is performed by the water purifying equipment is acquired.

The TDS (total dissolved solids) is also called as total amount of dissolved solids, and the measurement unit thereof is milligram/litre (mg/L), which indicates how many milligrams of the dissolved solids are dissolved in one litre of water. A higher TDS value represents more foreign matters contained in the water. Since the production of bacteria in the water purifying equipment is mainly associated with time and foreign matter cumulant, the TDS data is selected in the embodiment of the present disclosure as a basis for a server to prompt a user to clean the water purifying equipment.

Detection units are respectively arranged on a water inlet and a water outlet of the water purifying equipment, and are configured to respectively detect the TDS of the water inlet and the TDS of the water outlet so as to obtain water inlet TDS data and water outlet TDS data. Since the water introduced from the water inlet is purified by the water purifying equipment, every time after the water purifying is performed by the water purifying equipment, the water outlet TDS data detected at the water outlet will be smaller than the water inlet TDS data detected at the water inlet.

In embodiments of the present disclosure, the TDS data reported by the water purifying equipment to the server may include two types.

The first type is taking the water inlet TDS data and the water outlet TDS data as the reported TDS data.

Accordingly, step 301 may be as follows.

In step 3012, water inlet TDS data and water outlet TDS data detected after water purifying is performed by the water purifying equipment are acquired.

The second type is taking incremental TDS data calculated based on the water inlet TDS data and the water outlet TDS data as the reported TDS data.

The method for calculating the incremental TDS data is: Water inlet TDS data - Water outlet TDS data.

Accordingly, step 301 may be as follows.

In step 3012, water inlet TDS data and water outlet TDS data detected after water purifying is performed by the water purifying equipment are acquired.

In step 3013, incremental TDS data is calculated according to the water inlet TDS data and the water outlet TDS data.

With respect to the above-mentioned two reported TDS data, the TDS (total dissolved solids) required to be reported may be reported to the server every time after a user uses the water purifying equipment to perform water purifying; or the water purifying equipment may record the TDS data required to be reported during each water purifying, and when a number of usage reaches a preset number of times, report various TDS data required to be reported corresponding to the preset number of times to the server; or the water purifying equipment may record the TDS data required to be reported during each water purifying, and when a preset period is reached, report various TDS data required to be reported which are recorded within the preset period to the server.

In step 302, the TDS data is sent to a server, so that the server sends a prompt message to a terminal associated with the water purifying equipment according to the TDS data.

Accordingly, with respect to the first type of TDS data reported in step 301, step 302 may be as follows.

In step 3021, the water inlet TDS data and the water outlet TDS data are sent to the server.

Accordingly, with respect to the second type of TDS data reported in step 301, step 302 may be as follows.

In step 3022, the incremental TDS data is sent to the server.

In step 303, the server receives the TDS data detected after water purifying, the TDS data being reported by the water purifying equipment.

With respect to the first type of TDS data reported in step 301, step 303 may be as follows.

In step 3031, the server receives water inlet TDS data and water outlet TDS data detected after water purifying, the water inlet TDS data and the water outlet TDS being reported by the water purifying equipment.

With respect to the second type of TDS data reported in step 301, step 303 may be as follows.

In step 3032, the server receives incremental TDS data calculated according to the water inlet TDS data and the water outlet TDS data detected after the water purifying, the incremental TDS data being reported by the water purifying equipment.

In step 304, accumulative TDS data corresponding to the water purifying equipment is calculated according to the TDS data, the accumulative TDS data being a total TDS data increment of the water purifying equipment after a latest cleaning.

A corresponding relationship between an identity of the water purifying equipment and the accumulative TDS data is saved in the server, and the accumulative TDS data of each water purifying equipment registered in the server after the latest cleaning of the water purifying equipment is saved in the corresponding relationship.

The accumulative process of the accumulative TDS data corresponding to each water purifying equipment is as follows.

With respect to the first type of reported TDS data in step 301:

the server calculates incremental TDS data according to the water inlet TDS data and the water outlet TDS data in the TDS data reported by the water purifying equipment each time, and accumulates the incremental TDS data to the accumulative TDS data corresponding to the water purifying equipment.

With respect to the second type of reported TDS data in step 301:

the server accumulates the incremental TDS data reported by the water purifying equipment each time to the accumulative TDS data corresponding to the water purifying equipment.

In step 305, the cleaning period of the water purifying equipment under the current state is calculated according to the accumulative TDS data corresponding to the water purifying equipment and a preset maximum cleaning time.

The calculation in step 305 may either be directly performed sequentially after completion of step 304, or be performed in a preset time every day.

A calculation formula is:

$$days = days\_max - power(1 + (\textstyle\sum day\_dirt)/p2, p3);$$

wherein, *days* is the finally calculated cleaning period; *days_max* is the preset maximum cleaning time; $\sum day\_dirt$ is the total TDS data increment of the water purifying equipment after the latest cleaning; *p2* is a first preset constant; *p3* is a second preset constant; and *power* (*a, b*) function is configured to calculate *a* to the *b*$^{th}$ power, namely $a^b$.

In step 306, if a difference value between the current date and a latest cleaning date corresponding to the water purifying equipment is greater than or equal to the cleaning period, the cleaning period is determined to satisfy a preset condition.

For example: the current date is July 6, the latest cleaning date is July 1, and the calculated cleaning period is 10; the difference value between the current date and the latest cleaning date is 5, and 5 is smaller than the cleaning period (10), which indicates that the water purifying equipment does not require cleaning at present and a prompt message is unnecessary to be sent to the terminal associated with the water purifying equipment, and thus the processes from step 301 to step 305 may be performed continuously.

The current date is July 8, the latest cleaning date is July 1, and the calculated cleaning period is 7; the difference value between the current date and the latest cleaning date is 7, and this value is equal to the cleaning period (7), which indicates that the water purifying equipment requires cleaning at present and a preset condition of sending a prompt message has been satisfied.

In step 307, if the cleaning period satisfies the preset condition, a prompt message is sent to the terminal associated with the water purifying equipment to prompt a user to clean the water purifying equipment.

A correlation relationship between the identity of the water purifying equipment and the identity of a terminal is pre-saved in the server, and the correlation relationship is saved in the server when the water purifying equipment is used and registered at the server for the first time.

The identity of the terminal is inquired according to the identity of the water purifying equipment, and a prompt message is sent to the terminal according to the identity of the terminal to prompt a user, wherein the content of the prompt message may be: excessive foreign matters have been accumulated in the water purifying equipment, please clean the water purifying equipment in time.

The server will, after a cleaning event is reported by the water purifying equipment, conduct zero clearing on the accumulative TDS data corresponding to the water purifying equipment in the corresponding relationship between the water purifying equipment and the accumulative TDS data according to the identity of the water purifying equipment reporting the cleaning event, so as to accumulate the TDS data again from the current time to determine a time period of cleaning the equipment next time.

Accordingly, embodiments of the present disclosure also provide a method for reporting a cleaning event in the method for prompting a user based on a smart water purifying equipment. Referring to Fig. 4, the method includes the following steps.

In step 401, if a water purifying equipment is detected to trigger a cleaning event, a cleaning event message is sent by the water purifying equipment to the server.

The triggering process of the cleaning event may be that the cleaning event in a software program is triggered through demounting of hardware when the user unpacks the water purifying equipment, and manners of triggering the cleaning event will not be limited herein.

The cleaning event message also carries the identity of the water purifying equipment.

In step 402, the cleaning event message reported by the water purifying equipment is received by the server.

In step 403, the latest cleaning date corresponding to the water purifying equipment is updated according to the cleaning event message.

A cleaning record corresponding to the water purifying equipment is inquired by the server according to the identity of the water purifying equipment, the record including each cleaning date of the water purifying equipment, and the latest cleaning date therein being changed as the current date.

In step 404, zero clearing is performed on the accumulative TDS data corresponding to the water purifying equipment.

The server inquires the accumulative TDS data corresponding to the water purifying equipment in a corresponding relationship between the identity of the water purifying equipment and the accumulative TDS data according to the identity of the water purifying equipment, and performs zero clearing on the data, so that the water purifying equipment accumulates TDS data again after cleaning.

According to the embodiments of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; and if the cleaning period satisfies a preset condition, a prompt message is sent to the terminal associated with the water purifying equipment. In the course of using the water purifying equipment, a user is automatically prompted directed to the water purifying equipment requiring cleaning, so that the efficiency of using the water purifying equipment is increased and the human-machine interaction is improved.

Fourth Embodiment

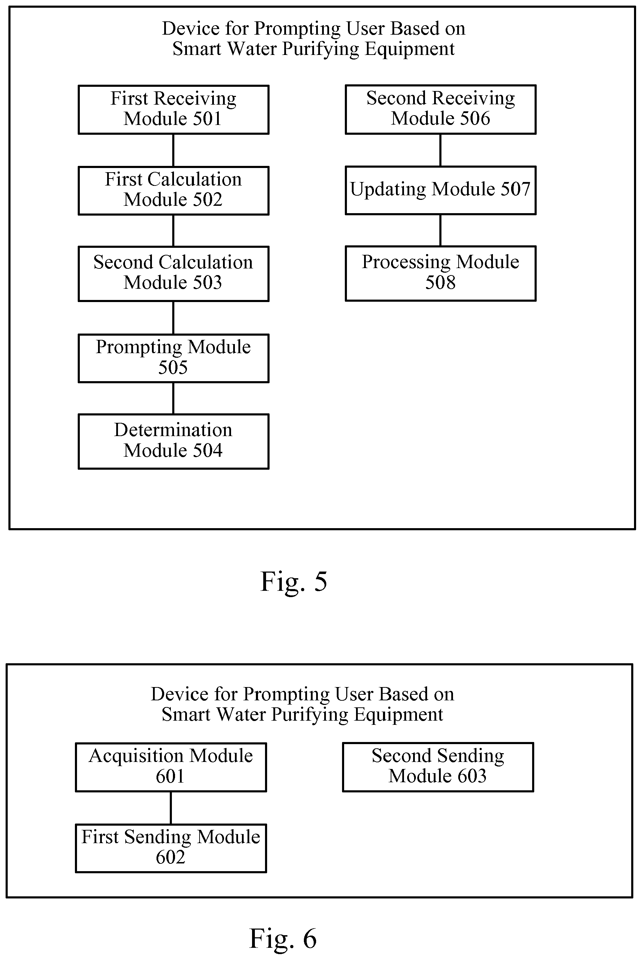

The embodiment of the present disclosure provides a device for prompting a user based on a smart water purifying equipment. Referring to Fig. 5, the device includes:

a first receiving module 501 configured to receive, by a server, total dissolved solids (TDS) data detected after water purifying and reported by a water purifying equipment;
a first calculation module 502 configured to calculate accumulative TDS data corresponding to the water purifying equipment according to the TDS data received by the first receiving module, the accumulative TDS data being a total TDS data increment of the water purifying equipment after the latest cleaning;
a second calculation module 503 configured to calculate a cleaning period of the water purifying equipment under the current state according to the accumulative TDS data corresponding to the water purifying equipment calculated by the first calculation module and preset maximum cleaning time; and
a prompting module 504 configured to send a prompt message to a terminal associated with the water purifying equipment to prompt a user to clean the cleaning equipment when the cleaning period calculated by the second calculation module satisfies a preset condition.

The first receiving module 501 includes:

a first receiving unit configured to receive, by a server, water inlet TDS data and water outlet TDS data detected after water purifying and reported by the water purifying equipment; and
a second receiving unit configured to receive, by the server, incremental TDS data obtained by calculating the water inlet TDS data and the water outlet TDS data detected after the water purifying and reported by the water purifying equipment.

The device further includes:
a determination module 505 configured to determine that the cleaning period satisfies a preset condition when a difference value between the current date and the latest cleaning date corresponding to the water purifying equipment is greater than or equal to the cleaning period calculated by the second calculation module.

The device further includes:

a second receiving module 506 configured to receive a cleaning event message reported by the water purifying equipment; and
an updating module 507 configured to update the latest cleaning date corresponding to the water purifying equipment according to the cleaning event message received by the second receiving module.

The device further includes:
a processing module 508 configured to conduct zero clearing on the accumulative TDS data corresponding to the water purifying equipment.

According to the embodiments of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; and if the cleaning period satisfies a preset condition, a prompt message is sent to the terminal associated with the water purifying equipment. In the course of using the water purifying equipment, a user is automatically prompted directed to the water purifying equipment requiring cleaning, so that the efficiency of using the water purifying equipment is increased and the human-machine interaction is improved.

Fifth Embodiment

The embodiment of the present disclosure provides a device for prompting a user based on a smart water purifying equipment. Referring to Fig. 6, the device includes:

an acquisition module 601 configured to, after water purifying is performed by a water purifying equipment, acquire TDS data detected after the water purifying is performed by the water purifying equipment; and
a first sending module 602 configured to send the TDS data acquired by the acquisition module to a server, so that the server sends a prompt message to a terminal associated with the water purifying equipment according to the TDS data.

The acquisition module 601 includes:

a first acquisition unit configured to acquire water inlet TDS data and water outlet TDS data detected after the water purifying is performed by the water purifying equipment; and
accordingly, the first sending module 602 includes:
a first sending unit configured to send the water inlet TDS data and the water outlet TDS data acquired by the first acquisition unit to the server.

The acquisition module 601 includes:

a second acquisition unit configured to acquire water inlet TDS data and water outlet TDS data detected after the water purifying is performed by the water purifying equipment; and
a calculation unit configured to calculate incremental TDS data according to the water inlet TDS data and the water outlet TDS data; and
accordingly, the first sending module 602 includes:
a second sending unit configured to send the incremental TDS data acquired by the first acquisition unit to the server.

The device further includes:
a second sending module 603 configured to send a cleaning event message to the server if detecting that the water purifying equipment triggers a cleaning event.
According to the embodiments of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; and if the cleaning period satisfies a preset condition, a prompt message is sent to the terminal associated with the water purifying equipment. In the course of using the water purifying equipment, a user is automatically prompted directed to the water purifying equipment requiring cleaning, so that the efficiency of using the water purifying equipment is increased and the human-machine interaction is improved.

Sixth Embodiment

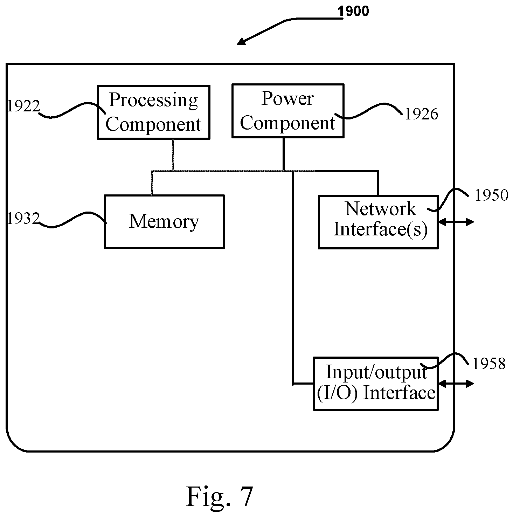

Fig. 7 is a block diagram of a device 1900 for prompting a user based on a smart water purifying equipment, according to an exemplary embodiment. For example, the device 1900 may be provided as a server. Referring to Fig. 7, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above method.
The device 1900 may also include a power component 1926 configured to perform power management of the device 1900, wired or wireless network interface(s) 1950 configured to connect the device 1900 to a network, and an input/output (I/O) interface 1958. The device 1900 may operate based on an operating system stored in the memory 1932, such as Windows ServerTM, Mac OS XTM, UnixTM, LinuxTM, FreeBSDTM, or the like.
According to the embodiments of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; and if the cleaning period satisfies a preset condition, a prompt message is sent to the terminal associated with the water purifying equipment. In the course of using the water purifying equipment, a user is automatically prompted directed to the water purifying equipment requiring cleaning, so that the efficiency of using the water purifying equipment is increased and the human-machine interaction is improved.

Seventh Embodiment

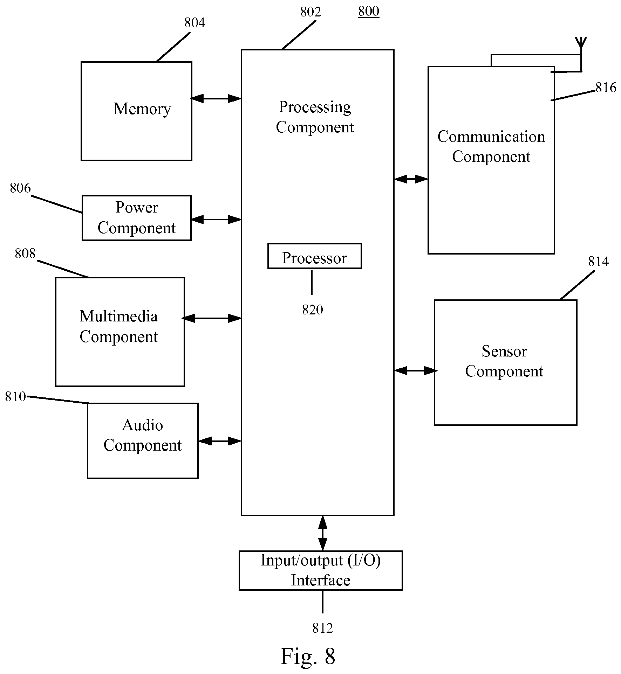

Fig. 8 is a block diagram of a device 800 for prompting a user based on a smart water purifying equipment, according to an exemplary embodiment. For example, the device 800 may be a mobile phone, a computer, a digital broadcast terminal, a messaging device, a gaming console, a tablet, a medical device, exercise equipment, a personal digital assistant, and the like.
Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

According to the embodiments of the present disclosure, the TDS data detected after water purifying is reported to the server by the water purifying equipment, then the server calculates the accumulative TDS data of the water purifying equipment according to the TDS data, and determines the cleaning period of the water purifying equipment according to the accumulative TDS data and preset maximum cleaning time; if the cleaning period satisfies a preset condition, a prompt message is sent to the terminal associated with the water purifying equipment. In the course of using the water purifying equipment, a user is automatically prompted directed to the water purifying equipment requiring cleaning, so that the efficiency of using the water purifying equipment is increased and the human-machine interaction is improved.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for prompting a user based on a smart water purifying equipment, **characterized in that**, the method comprises:

   receiving (101), by a server, total dissolved solids (TDS) data detected after water purifying and reported by the water purifying equipment;
   calculating (102) accumulative TDS data corresponding to the water purifying equipment according to the TDS data, the accumulative TDS data being a total TDS data increment of the water purifying equipment after a latest cleaning;
   calculating (103) a cleaning period of the water purifying equipment under the current state according to the accumulative TDS data corresponding to the water purifying equipment and a preset maximum cleaning time;
   if a difference value between a current date and a latest cleaning date corresponding to the water purifying equipment is greater than or equal to the cleaning period, sending (104) a prompt message to a terminal associated with the water purifying equipment to prompt a user to clean the water purifying equipment.

2. The method according to claim 1, **characterized in that**, the receiving (101), by the server, the TDS data detected after the water purifying is performed by the water purifying equipment comprises:

   receiving (3031), by the server, water inlet TDS data and water outlet TDS data detected after the water purifying and reported by the water purifying equipment; or,
   receiving (3032), by the server, incremental TDS data obtained by calculating water inlet TDS data and water outlet TDS data detected after the water purifying and reported by the water purifying equipment.

3. The method according to claim 1, **characterized in that**, the method further comprises:

   receiving (402) a cleaning event message reported by the water purifying equipment; and
   updating (403) the latest cleaning date corresponding to the water purifying equipment according to the cleaning event message.

4. The method according to claim 3, **characterized in that**, after the updating (403) the latest cleaning date corresponding to the water purifying equipment, the method further comprises:
   conducting (404) zero clearing on the accumulative TDS data corresponding to the water purifying equipment.

5. A device for prompting a user based on a smart water purifying equipment, **characterized in that**, the device comprises:

a first receiving module (501) configured to receive, by a server, total dissolved solids (TDS) data detected after water purifying and reported by a water purifying equipment;

a first calculation module (502) configured to calculate accumulative TDS data corresponding to the water purifying equipment according to the TDS data received by the first receiving module, the accumulative TDS data being a total TDS data increment of the water purifying equipment after a latest cleaning;

a second calculation module (503) configured to calculate a cleaning period of the water purifying equipment under the current state according to the accumulative TDS data corresponding to the water purifying equipment calculated by the first calculation module and a preset maximum cleaning time; and

a prompting module (504) configured to send a prompt message to a terminal associated with the water purifying equipment to prompt a user to clean the water purifying equipment ifa difference value between a current date and a latest cleaning date corresponding to the water purifying equipment is greater than or equal to the cleaning period.

6. The device according to claim 5, **characterized in that**, the first receiving module (501) comprises:

a first receiving unit configured to receive, by a server, water inlet TDS data and water outlet TDS data detected after the water purifying and reported by the water purifying equipment; and

a second receiving unit configured to receive, by a server, incremental TDS data obtained by calculating water inlet TDS data and water outlet TDS data detected after the water purifying and reported by the water purifying equipment.

7. A computer program, which when executing on a processor of a terminal, performs a method according to any one of claims 1 to 4.

## Patentansprüche

1. Ein Verfahren zum Auffordern eines Benutzers auf der Grundlage einer intelligenten Wasserreinigungs-Ausrüstung, **dadurch gekennzeichnet, dass** das Verfahren Folgendes umfasst:

Empfangen (101), durch einen Server, von Daten über den Gesamtfeststoffgehalt (TDS - *Total Dissolved Solids)* die nach der Wasserreinigung erfasst und von der Wasserreinigungs-Ausrüstung gemeldet werden;

Berechnen (102) von kumulativen TDS-Daten, die der Wasserreinigungs-Ausrüstung entsprechen, gemäß den TDS-Daten, wobei die kumulativen TDS-Daten ein Gesamt-TDS-Dateninkrement der Wasserreinigungs-Ausrüstung nach einer letzten Reinigung sind;

Berechnen (103) einer Reinigungszeit der Wasserreinigungs-Ausrüstung nach dem aktuellen Stand auf der Grundlage der kumulativen TDS-Daten, die der Wasserreinigungs-Ausrüstung entsprechen, und einer voreingestellten maximalen Reinigungszeit;

wenn ein Differenzwert zwischen einem aktuellen Datum und einem der Wasserreinigungs-Ausrüstung entsprechenden spätesten Reinigungsdatum größer oder gleich dem Reinigungszeitraum ist, Senden (104) einer Aufforderungsnachricht an ein mit dem Wasserreinigungsgerät verbundenes Terminal, um einen Benutzer aufzufordern, die Wasserreinigungs-Ausrüstung zu reinigen.

2. Das Verfahren nach Anspruch 1, **dadurch gekennzeichnet, dass** das Empfangen (101) durch den Server der nach der Wasserreinigung erfassten TDS-Daten durch die Wasserreinigungs-Ausrüstung Folgendes umfasst:

Empfangen (3031), durch den Server, von TDS-Daten des Wassereinlasses und TDS-Daten des Wasserauslasses, die nach der Wasserreinigung erfasst und von der Wasserreinigungs-Ausrüstung gemeldet werden; oder,

Empfangen (3032), durch den Server, von inkrementellen TDS-Daten, die erhalten werden durch die Berechnung der TDS-Daten des Wassereinlasses und der TDS-Daten des Wasserauslasses, die nach der Wasserreinigung erkannt und von der Wasserreinigungs-Ausrüstung gemeldet werden.

3. Das Verfahren nach Anspruch 1, **dadurch gekennzeichnet, dass** das Verfahren ferner Folgendes umfasst:

Empfangen (402) einer von der Wasserreinigungs-Ausrüstung gemeldeten Reinigungsereignismeldung; und Aktualisieren (403) des letzten Reinigungsdatums der Wasserreinigungs-Ausrüstung gemäß der Reinigungsereignismeldung.

**4.** Das Verfahren nach Anspruch 3, **dadurch gekennzeichnet, dass** nach dem Aktualisieren (403) des spätesten Reinigungsdatums, das der Wasserreinigungs-Ausrüstung entspricht, das Verfahren weiterhin Folgendes umfasst: Durchführen (404) eines Nullabgleichs der kumulativen TDS-Daten, die der Wasserreinigungs-Ausrüstung entsprechen.

**5.** Eine Vorrichtung zum Auffordern eines Benutzers auf der Grundlage einer intelligenten Wasserreinigungs-Ausrüstung, **dadurch gekennzeichnet, dass** die Vorrichtung Folgendes umfasst:

ein erstes Empfangsmodul (501), das so konfiguriert ist, dass es von einem Server Daten über den Gesamtfeststoffgehalt (TDS - *Total Dissolved Solids*) empfängt, die nach der Wasserreinigung erfasst und von einer Wasserreinigungs-Ausrüstung gemeldet werden;

ein erstes Berechnungsmodul (502), das konfiguriert ist, um kumulative TDS-Daten entsprechend der Wasserreinigungs-Ausrüstung gemäß den TDS-Daten zu berechnen, die von dem ersten Empfangsmodul empfangen werden, wobei die kumulativen TDS-Daten ein Gesamt-TDS-Dateninkrement der Wasserreinigungs-Ausrüstung nach einer letzten Reinigung sind;

ein zweites Berechnungsmodul (503), das konfiguriert ist, um eine Reinigungsperiode der Wasserreinigungs-Ausrüstung nach dem aktuellen Stand auf der Grundlage der kumulativen TDS-Daten, die der durch das erste Berechnungsmodul berechneten Wasserreinigungs-Ausrüstung entsprechen, und einer vorgegebenen maximalen Reinigungszeit zu berechnen; und

ein Aufforderungsmodul (504), das konfiguriert ist, um eine Aufforderungsnachricht an ein mit der Wasserreinigungs-Ausrüstung verbundenes Terminal zu senden, um einen Benutzer dazu aufzufordern, die Wasserreinigungs-Ausrüstung zu reinigen, wenn ein Differenzwert zwischen einem aktuellen Datum und einem letzten Reinigungsdatum, das der Wasserreinigungs-Ausrüstung entspricht, größer oder gleich der Reinigungsperiode ist.

**6.** Die Vorrichtung nach Anspruch 5, **dadurch gekennzeichnet, dass** das erste Empfangsmodul (501) Folgendes umfasst:

eine erste Empfangseinheit, die so konfiguriert ist, dass sie von einem Server TDS-Daten des Wassereinlasses und TDS-Daten des Wasserauslasses empfängt, die nach der Wasserreinigung erfasst und von der Wasserreinigungs-Ausrüstung gemeldet werden; und

eine zweite Empfangseinheit, die so konfiguriert ist, dass sie von einem Server inkrementelle TDS-Daten empfängt, die durch Berechnung der TDS-Daten des Wassereinlasses und der TDS-Daten des Wasserauslasses erhalten werden, die nach der Wasserreinigung erfasst und von der Wasserreinigungs-Ausrüstung gemeldet werden.

**7.** Ein Computerprogramm, das beim Ausführen in einem Prozessor eines Terminals ein Verfahren nach irgendeinem der Ansprüche von 1 bis 4 ausführt.

**Revendications**

**1.** Procédé de requête d'utilisateur sur la base d'un équipement de purification d'eau intelligent, **caractérisé en ce que** le procédé comprend :

recevoir (101), par le biais d'un serveur, des données de total de solides dissous (TDS) détectées après une purification d'eau, et signalées par l'équipement de purification d'eau ;

calculer (102) des données TDS cumulatives correspondant à l'équipement de purification d'eau selon les données TDS, les données TDS cumulatives correspondant à un incrément de données TDS totales de l'équipement de purification d'eau après un dernier nettoyage ;

calculer (103) une période de nettoyage de l'équipement de purification d'eau dans l'état en cours selon les données TDS cumulatives correspondant à l'équipement de purification d'eau et un temps de nettoyage maximum prédéfini ;

si une valeur de différence, entre une date en cours et une date de nettoyage la plus récente correspondant à l'équipement de purification d'eau, est supérieure ou égale à la période de nettoyage, envoyer (104) un message de requête à un terminal associé à l'équipement de purification d'eau, afin d'inviter un utilisateur à nettoyer l'équipement de purification d'eau.

**2.** Procédé selon la revendication 1, **caractérisé en ce que**, l'étape de réception (101), par le biais du serveur, des données TDS détectées après la mise en oeuvre de la purification d'eau par l'équipement de purification d'eau, comprend :

recevoir (3031), par le biais du serveur, des données TDS d'entrée d'eau et des données TDS de sortie d'eau détectées après la purification d'eau et signalées par l'équipement de purification d'eau ; ou
recevoir (3032), par le biais du serveur, des données TDS incrémentales obtenues en calculant des données TDS d'entrée d'eau et des données TDS de sortie d'eau détectées après la purification d'eau et signalées par l'équipement de purification d'eau.

**3.** Procédé selon la revendication 1, **caractérisé en ce que** le procédé comprend en outre :

recevoir (402) un message d'événement de nettoyage signalé par l'équipement de purification d'eau ; et
mettre à jour (403) la date de nettoyage la plus récente correspondant à l'équipement de purification d'eau selon le message d'événement de nettoyage.

**4.** Procédé selon la revendication 3, **caractérisé en ce que**, suite à l'étape de mise à jour (403) de la date de nettoyage la plus récente correspondant à l'équipement de purification d'eau, le procédé comprend en outre :
exécuter (404) une remise à zéro sur les données TDS cumulatives correspondant à l'équipement de purification d'eau.

**5.** Dispositif de requête d'utilisateur sur la base d'un équipement de purification d'eau intelligent, **caractérisé en ce que** le dispositif comprend :

un premier module de réception (501) configuré de manière à recevoir, par le biais d'un serveur, des données de total de solides dissous (TDS) détectées après une purification d'eau, et signalées par un équipement de purification d'eau ;
un premier module de calcul (502) configuré de manière à calculer des données TDS cumulatives correspondant à l'équipement de purification d'eau selon les données TDS reçues par le premier module de réception, les données TDS cumulatives correspondant à un incrément de données TDS totales de l'équipement de purification d'eau après un dernier nettoyage ;
un second module de calcul (503) configuré de manière à calculer une période de nettoyage de l'équipement de purification d'eau dans l'état en cours selon les données TDS cumulatives correspondant à l'équipement de purification d'eau, calculées par le premier module de calcul, et un temps de nettoyage maximum prédéfini ; et
un module de requête (504) configuré de manière à envoyer un message de requête à un terminal associé à l'équipement de purification d'eau, afin d'inviter un utilisateur à nettoyer l'équipement de purification d'eau si une valeur de différence, entre une date en cours et une date de nettoyage la plus récente correspondant à l'équipement de purification d'eau, est supérieure ou égale à la période de nettoyage.

**6.** Dispositif selon la revendication 5, **caractérisé en ce que** le premier module de réception (501) comprend :

une première unité de réception configurée de manière à recevoir, par le biais d'un serveur, des données TDS d'entrée d'eau et des données TDS de sortie d'eau détectées après la purification d'eau et signalées par l'équipement de purification d'eau ; et
une seconde unité de réception configurée de manière à recevoir, par le biais d'un serveur, des données TDS incrémentales, obtenues en calculant des données TDS d'entrée d'eau et des données TDS de sortie d'eau détectées après la purification d'eau et signalées par l'équipement de purification d'eau.

**7.** Programme informatique qui, lorsqu'il est exécuté sur un processeur d'un terminal, met en oeuvre un procédé selon l'une quelconque des revendications 1 à 4.

101    Receive, by a server, Total Dissolved Solids (TDS) data detected after water purifying is performed by a water purifying equipment

102    Calculate accumulative TDS data corresponding to the water purifying equipment according to the TDS data

103    Calculate a cleaning period of the water purifying equipment under the current state according to the calculated accumulative TDS data and a preset maximum cleaning time

104    If the cleaning period satisfies a preset condition, send a prompt message to a terminal associated with the water purifying equipment

Fig. 1

201    After water purifying is performed by a water purifying equipment, acquire TDS data detected after the water purifying is performed by the water purifying equipment

202    Send the TDS data to a server

Fig. 2

3011 — Acquire water inlet TDS data and water outlet TDS data detected after water purifying is performed by a water purifying equipment

3021 — Send the water inlet TDS data and the water outlet TDS data to a server

3031 — Receive, by the server, the water inlet TDS data and the water outlet TDS data detected after the water purifying and reported by the water purifying equipment

3012 — Acquire water inlet TDS data and water outlet TDS data detected after water purifying is performed by a water purifying equipment

3013 — Calculate incremental TDS data according to the water inlet TDS data and the water outlet TDS data

3022 — Send the incremental TDS data to a server

3032 — Receive, by the server, the incremental TDS data calculated according to the water inlet TDS data and the water outlet TDS data detected after the water purifying and reported by the water purifying equipment

304 — Calculate accumulative TDS data corresponding to the water purifying equipment according to the TDS data, the accumulative TDS data being the total TDS data increment of the water purifying equipment after the latest cleaning

305 — Calculate a cleaning period of the water purifying equipment under the current state according to the accumulative TDS data corresponding to the water purifying equipment and a preset maximum cleaning time

306 — If a difference value between the current date and a latest cleaning date corresponding to the water purifying equipment is greater than or equal to the cleaning period, determine that the cleaning period satisfies a preset condition

307 — If the cleaning period satisfies the preset condition, send a prompt message to a terminal associated with the water purifying equipment

Fig. 3

401 — If detecting that a water purifying equipment triggers a cleaning event, the water purifying equipment sends a cleaning event message to a server

402 — The server receives the cleaning event message reported by the water purifying equipment

403 — Update the latest cleaning date corresponding to the water purifying equipment according to the cleaning event message

404 — Conduct zero clearing on accumulative TDS data corresponding to the water purifying equipment

Fig. 4

**Device for Prompting User Based on
Smart Water Purifying Equipment**

First Receiving
Module 501

Second Receiving
Module 506

First Calculation
Module 502

Updating Module 507

Second Calculation
Module 503

Processing Module
508

Prompting Module
505

Determination
Module 504

Fig. 5

**Device for Prompting User Based on
Smart Water Purifying Equipment**

Acquisition Module
601

Second Sending
Module 603

First Sending Module
602

Fig. 6

**1900**

Fig. 7

804      802      800

| Memory | Processing Component | Communication Component |
|---|---|---|

816

806   Power Component

Processor

820

808   Multimedia Component

814   Sensor Component

810   Audio Component

Input/output (I/O) Interface

812

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102874941

- KR 20130136406